# EUROPEAN PATENT SPECIFICATION

(11) **EP 1 729 369 B1**
(45) Date of publication and mention of the grant of the patent: **05.01.2011**
(21) Application number: 06009441.4
(22) Date of filing: 08.05.2006
(51) Int. Cl.: H01R 13/66

(54) **Connecting device for connecting electrical foil conductors**
Kontaktvorrichtung zum kontaktieren von Leiterfolien
Dispositif pour la mise en contact avec des conducteurs à feuille

(30) Priority: 03.06.2005 DE 102005025632
(43) Date of publication of application: 06.12.2006
(73) Proprietor: Tyco Electronics AMP GmbH, 64625 Bensheim (DE)
(72) Inventor: Feldmeier, Günter, 64653 Lorsch (DE); Scherer, Heinz, 64625 Bensheim (DE); Woeber, Andreas, 76709 Kronau (DE); Reitmayer, Daniel, 64385 Reichelsheim (DE)
(74) Representative: Hirsch, Peter

(56) References cited:
- EP-A- 1 487 064
- EP-A1- 0 999 601
- WO-A-03/041227
- DE-A1-102004 001 011
- US-A- 4 203 646
- US-B1- 6 582 249

## Description

The invention relates to a connecting device for connecting at least one electrical foil conductor to at least one connection line. A connecting device of this type is intended, in particular, for electrically connecting solar cells of a solar module.

A connecting device in the form of a terminal box for electrically connecting a solar module is known from DE 10 2004 010658 A1. This terminal box comprises a housing, to the base of which is attached a connecting arrangement forming a circuit, the connecting arrangement comprising clamping members, on the one side, and output lines being guided out of the arrangement, on the other side. The circuit includes a diode. Once the connecting arrangement forming the circuit has been introduced into the terminal box, the terminal box is filled with a filler. The terminal box is then covered with a box cover and closed.

US 6 582 249 B1 shows an apparatus for making contact with a foil conductor, in particular of a solar module, the apparatus having a housing, a first connecting region for connecting to the foil conductor, and a second connecting region with at least one contact for connecting at least one plug connector. At least one conductor rail connects the contact to the foil conductor. The conductor rail has a contact region for detachable connection to the foil conductor. The conductor rail has a terminal area for receiving electronic modules, for example a diode or lead portions. Each conductor rail is connected to the contact of the second connecting region.

WO 03/041227 A relates to an assembly comprised of a panel-like constructed electrical/electronic module comprising a flat surface with exposed, contactable connection sections serving as a part of an essentially flat conductor track structure for electrically connecting the module. The assembly also comprises a connection unit provided with electrical/electronic elements, which are located on a conductor track structure situated in a plane parallel to the conductor track structure of the module. In addition, the assembly is fitted with means for contacting connection sections of the module whereby enabling the module to be electrically connected via the connection unit. The means for contacting the connection sections of the module are bent out from the plane of the conductor track structure, and are connection sections that represent a portion of the conductor track structure. The connection sections of the module are rigid and are electrical conductor sections that can be bent out from the plane of the conductor track structure of the module. Connection sections of the connection unit are arranged according to the arrangement of connection sections of the module so that when the connection unit is connected to the module, one connection segment of the module and one of the connection unit are electrically connected to one another, abut against one section, and, in the area in which they abut, are situated in a spatial position different from that of the planes of the conductor track structures.

According to DE 10 2004 001011 A1 connecting terminals are accommodated side by side in a terminal box casing. Diodes are connected electrically between the respective connecting terminals. The diodes are connected in series via the intermediate terminal mounts. Partition walls for partitioning diode accommodation spaces for at least partly accommodating the diodes are formed in the terminal box casing.

In conventional solar cell modules, the backs, remote from the solar irradiation side, of the solar cells are contacted using connection foils, which are connected using a connecting device, in the form of the terminal box, to connection lines, also known as solar lines. This connection is conventionally produced by soldering, screwing or using a clamp acting on one side on a conductor rail and the connection foil applied thereto.

As a result of the growing market for solar modules, the demand for terminal boxes that may be used for such modules has increased accordingly, so terminal boxes have become a typical mass-produced product. It is therefore desirable to make both the components and the methods for producing connecting devices in the form of terminal boxes as simple and cost-effective as possible, while maintaining high-quality, reliable connection.

With regard to this object, the present invention provides a connecting device of the type specified in claim 1, which may be produced using a method of the type specified in claim 9, and a solar module according to claim 15 equipped with a connecting device of this type. Various embodiments are recited in the dependent claims.

According to a first aspect, the invention provides a connecting device for connecting at least one electrical foil conductor to at least one connection line. A connector housing of the connecting device comprises at least one connection line through-hole and at least one foil conductor through-hole. Provided in the connector housing is an intermediate connecting arrangement having at least one intermediate connector, which extends between the connection line through-hole and the foil conductor through-hole and comprises a connection line-connection region, which is adjacent to the connection line through-hole, for connecting to a connection line, which is guided into the interior of the housing through the connection line through-hole, and a current conductor, which extends into the vicinity of the foil conductor through-hole and has a foil conductor connection region for connecting to a foil conductor, which is guided into the interior of the connector housing through the foil conductor through-hole. The current conductor comprises a current conductor region configured for applying a foil conductor-connection region. The current conductor region is electrically connected to the foil conductor-connection region adjacent thereto by clamping the foil conductor-connection region to the current conductor region using a clamping spring.

As the current conductor does not have to be configured in any particular manner for the electrical connection to the foil conductor-connection region, for example for a soldered connection, a screwed connection or a crimped connection, the current conductor of the intermediate connecting arrangement on the foil conductor-connection side may be very simple in its construction. The connection by means of the clamping spring is also simple and inexpensive. The clamping spring has merely to be attached to the current conductor region and the foil conductor-connection region adjacent thereto, and this may be done in an automated manner.

The connecting device according to the invention may be used for connecting any foil conductors. In a practical application, the device according to the invention is used for connecting a solar module, the at least one foil conductor being connected to an electrical contacting region of at least one solar cell.

In an embodiment of the invention, the clamping spring has a substantially C-shaped cross-section, the axial length of the clamping spring being dependent on the dimensions of the current conductor region to which one or more foil conductors are to be connected. The clamping spring may be used to clamp the foil conductor-connection regions of a plurality of foil conductors to a current conductor region, wherein the plurality of foil conductor-connection regions may be arranged above one another and/or adjacent to one another.

A clamping spring of this type exerts clamping pressure on both sides of the current conductor region to be connected to the foil conductor, i.e. the clamping pressure acts symmetrically on the current conductor region. In contrast to a clamp acting on the current conductor region on only one side, which clamp has to be fastened at some point adjacent to the current conductor region to allow an opposing spring force to be absorbed at this location, the clamping spring according to the invention, which may be attached to the current conductor region, does not need to be mounted at any point outside the current conductor region, but rather has simply to be attached to the current conductor region with the foil conductor adjacent thereto. A process of this type for mounting the clamping spring may be mechanically automated substantially more easily and using simpler means.

In an embodiment of the invention, the current conductor region is formed by a dimensionally stable flat conductor; this both facilitates the application of the foil conductor-connection region and the attachment of the clamping spring and allows the use of a clamping spring having a higher clamping spring force, leading in turn to a more reliable clamping contact between the current conductor region and foil conductor connection region.

In an embodiment of the invention, the intermediate connecting arrangement comprises a pressed screen having at least one crimped contact region for crimping to the at least one connection line and a flat contact region for clamping the at least one foil conductor connection region. This embodiment is particularly advantageous in terms of the manufacturing process and with regard to costs, as the pressed screen may be produced by a simple pressing process and, if appropriate, subsequent bending process. This is relatively simple compared to a printed circuit board, for example, which requires not only a significantly greater number of production steps, but also significantly more expensive production equipment.

If an additional component, for example in the form of a diode, is to be accommodated in the terminal box comprising the connecting device according to the invention, the pressed screen is provided with additional terminal clamps for electrically connecting an additional component of this type. If a plurality of additional components are to be accommodated in the terminal box, the pressed screen is configured with a corresponding number of terminal clamps.

In an embodiment of the invention, a connection line, which is guided through the connection line through-hole, is sheathed in the region of the connection line through-hole with a material producing a seal from the connector housing. A plastic material that is resistant to light and weather on one side may be used for this purpose, as solar modules are frequently mounted in such a way that they are exposed to light, wind and weather.

In order to improve the adhesion between the outer casing, which consists, for example, of a crosslinked plastic material, of the connection line and the sealing material sheathing it, an agent improving the adhesion between both materials is arranged, in an embodiment of the invention, at the location at which the outer casing of the connection line is to be injected, before the sealing material is applied. An agent of this type is, for example, a cable clamp, which is secured to the outer casing of the connection line before it is sheathed with the sealing material.

In an embodiment of the invention, the sealing material is applied to the housing of the connecting device in such a way that a strain relief member for the connection line is formed simultaneously with the applied material.

The sealing material may be applied in that the housing is inserted into an injection mold, by means of which the sealing material is applied to the connection line and the connector housing, once the connection line has been guided through the connection line through-hole.

In an embodiment of the invention, the connector housing is provided with a locking device for fixing the pressed screen in the connector housing. This measure also helps to reduce the complexity and costs of producing the connecting device according to the invention.

According to a second aspect, the invention provides a method for producing a connection between a foil conductor and a connection line using a connecting device according to the invention, the at least one connection line being guided through the connection line through-hole into the interior of the housing and being connected to the connection line-connection region of the intermediate connecting arrangement, and the at least one foil connection region being guided through the foil conductor through opening to the foil .conductor-connection region of the intermediate connecting arrangement, where it is clamped using the clamping spring.

If, in an embodiment of the method according to the invention, the intermediate connecting arrangement in the form of the pressed screen is used, the connection is produced in a particularly simple and advantageous manner. Firstly, the free end of the connection line, which is guided through the connection line through-hole into the interior of the connector housing, is crimped to the crimped contact region of the pressed screen; the pressed screen is then secured in the desired manner, for example using the aforementioned locking device, in the interior of the connector housing, and the foil conductor-connection region, which is guided through the foil conductor through-hole into the interior of the connector housing, is then crimped to the pressed screen.

A connecting device according to the invention is suitable for connecting one or more foil conductors and/or one or more connection lines. If a connecting device according to the invention is used for connecting contacting foils of solar modules, two foil conductors are, in practical embodiments, each connected to one or two connection lines, depending on whether the connecting device is intended to provide an electrical connection of solar cells in series or in parallel. As the two foil conductors to be connected to the connecting device have different potentials, the intermediate connecting arrangement of the connecting device comprises two connecting branches for producing a connection, isolated in terms of potential, between each of the two foil conductors and the associated connection line or the associated connection lines.

The connecting device according to the invention may be manufactured in a comparatively simple and inexpensive manner, especially if the intermediate connecting arrangement is produced in the form of the pressed screen.

This is particularly the case in embodiments of the invention in which the pressed screen is inserted into the connector housing while still in one piece and is only then broken down into the pressed screen members, because the fixing of the pressed screen by the connector housing during the isolating process facilitates this process, especially if it is machine-automated.

The invention will now be described in greater detail with reference to various embodiments. In the drawings:
Fig. 1 is a schematic side view of a solar module provided with a connecting device according to the invention;
Fig. 2 is a perspective oblique view of a first embodiment of a connecting device according to the invention, which is still open;
Fig. 3 is a perspective oblique view, partially in cross-section, of the connecting device shown in Fig. 2;
Fig. 4 is a perspective oblique view, similar to that in Fig. 2, with a pressed screen being particularly clearly visible;
Fig. 5 shows the connecting device shown in Fig. 4, once it has been closed using a cover; and
Fig. 6 is a perspective oblique view, partially in cross-section, of a second embodiment of a connecting device according to the invention.

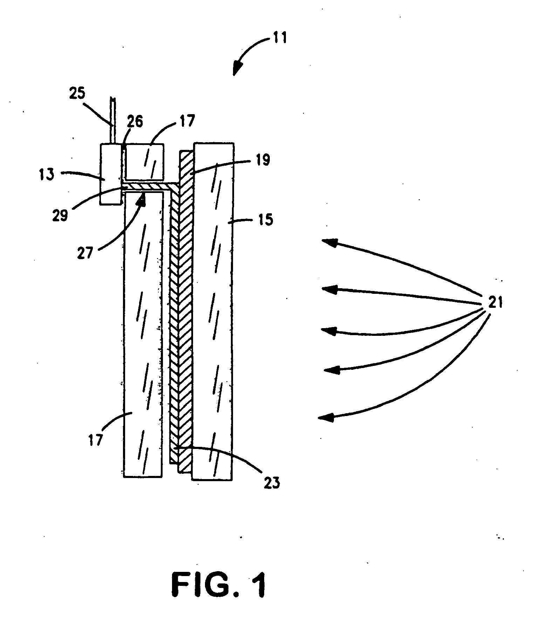

Fig. 1 is a schematic, not-to-scale side view of a solar module 11 provided with a connecting device 13 according to the invention, also referred to hereinafter as a connecting box.

The solar module 11 basically comprises a solar irradiation-side cover sheet 15 made from a transparent material and an irradiation shadow-side protective sheet 17. The cover sheet 15 is conventionally made from glass. The protective sheet 17 may also be made from glass or from a protective film. At least one solar cell 19, which supplies electrical energy when irradiated by light, for example sunlight (indicated by light beams 21), is located between the two sheets 15 and 17. The electrical energy is removed from the solar cell 19 using a conductor foil 23, conventionally in the form of a copper foil, forming a conductor pattern. For this purpose, the conductor foil 23 is, on one side, electrically contacted with a back of the irradiation shadow-side of the solar cell 19 and, on the other side, connected to the connecting box 13, from which the solar cell energy is guided out to a consumer (not shown) using connection lines 25.

Whereas in the case of conventional solar modules, a connecting box is arranged adjacent to a peripheral side of the solar module 11, in the case according to the invention, the connecting box 13 is fastened to the back of the protective sheet 17, in practical embodiments by adhesion using adhesive 26, and the protective sheet 17 is provided with one or more through-holes 27, through which one or more foil conductors 29 may be guided away from the back of the cover sheet 15 toward the connecting box 13.

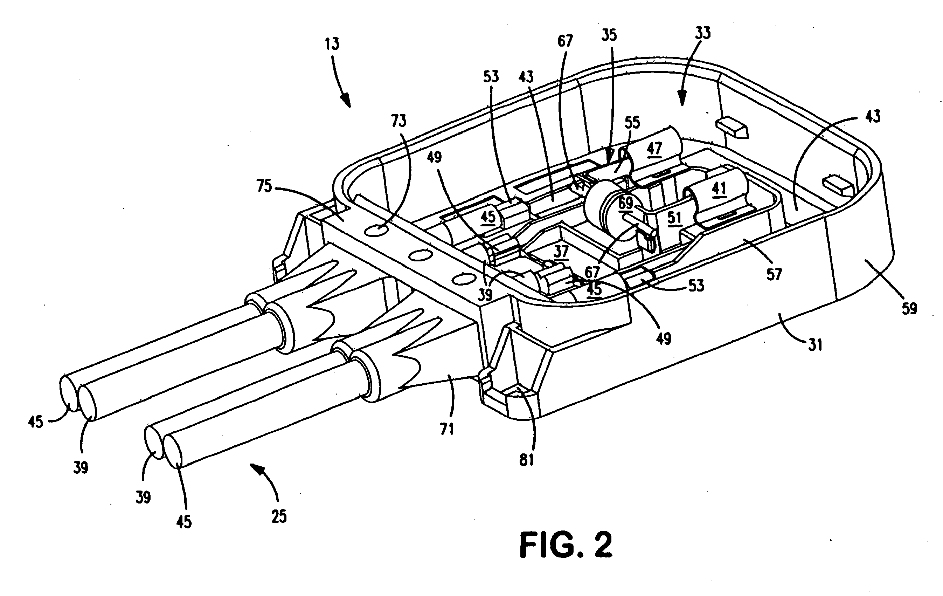

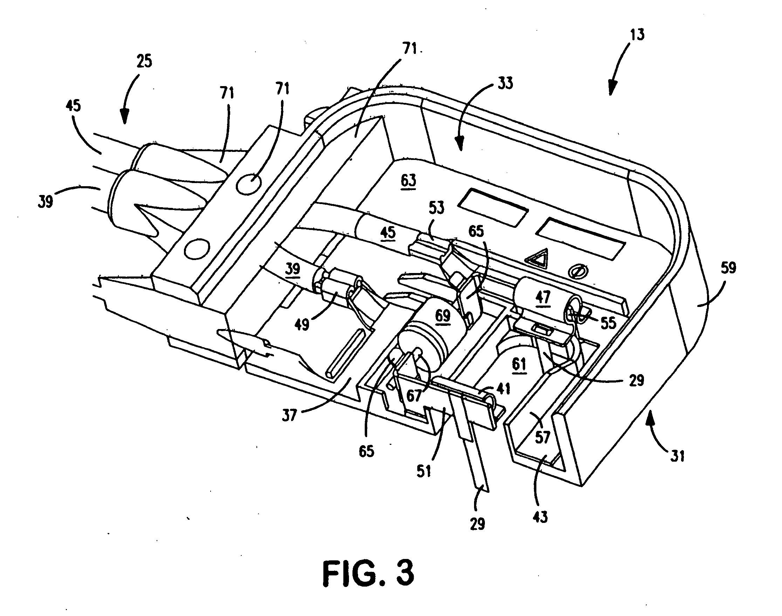

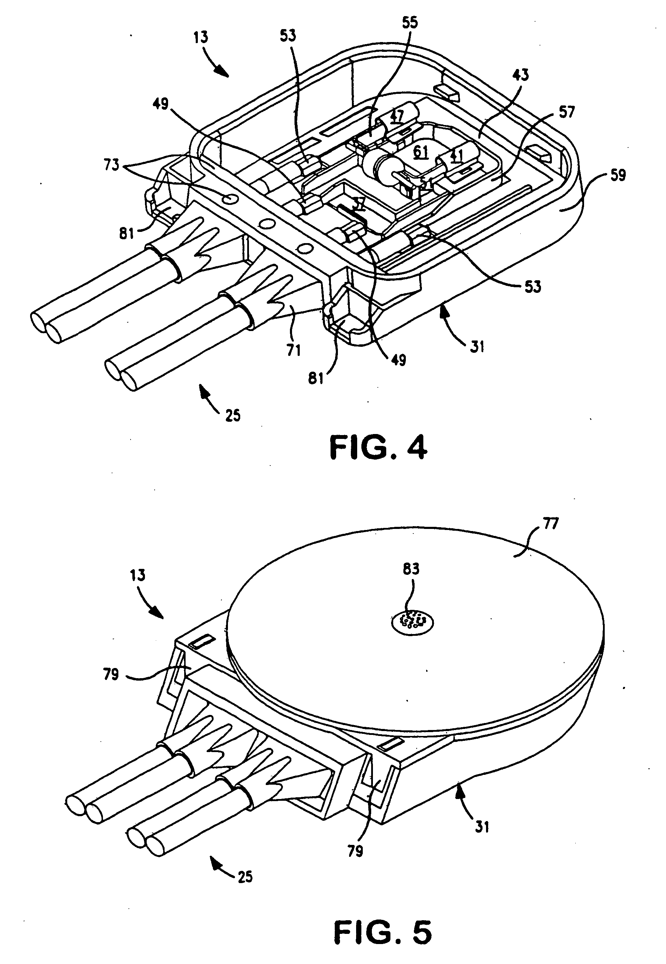

A first embodiment of a connecting device 13 according to the invention is, firstly, illustrated in Figs. 2 and 3 and presented in the manner of a photograph in Figs. 4 and 5; in Figs. 2 to 4 the connecting device 13 is still open, while in Fig. 5 it is closed.

The connecting device 13 comprises a connector housing 31 made from a conventional plastic material comprising an interior 33, in which a multipart pressed screen 35, serving as an intermediate connecting arrangement, is arranged. The pressed screen 35 is configured for the clamping connection of two foil conductors 29, which may be seen in Fig. 3, and for connecting four connection lines 25 consisting of inner and outer connection lines 39 and 45. As the two foil conductors 29 are connected to solar cell contacts having different potentials, the pressed screen 35 is provided with first and second pressed screen members 37 and 43, which are isolated from each other in terms of potential. The first pressed screen member 37 provides the connection between the inner connection lines 39, as seen in Fig. 2, and a first clamping spring 41, located on the right hand side in Fig. 2. A second pressed screen member 43 connects the two outer connection lines 45 to a second clamping spring 47, located on the left-hand side in Fig. 2. For this purpose, the first pressed screen member 37 connects two first crimped connections 49, for producing a crimped connection to each of the two inner connection lines 39, to a first connection web 51, to which the first clamping spring 41 may be clamped. The second pressed screen member 43 connects second crimped connections 53, for producing a crimped connection of the two outer connection lines 45, to a second connection web 55 for clamping the second clamping spring 47. Between the first and second pressed screen members 37 and 43 extends a partition 57 made from the same insulating material as that from which the connector housing 31 is constructed, the partition 57 being in one piece with the connector housing 31 in the illustrated embodiment. The first pressed screen member 37 is located within the partition 57, whereas the second pressed screen member 43 is located between the partition 57 and an outer wall 59 of the connector housing 31.

The first and second connection webs 51 and 55 are bent upward from each pressed screen member 39 and 43, respectively, so they are located vertically upward in a position shown in Figs. 2 and 3 of the connecting device 13. As is particularly clear in Fig. 3, the foil conductors 29 are guided through a foil conductor through-hole 61 in a base 63 of the connector housing 31 and wound around the associated first or second connection web 51 or 55, respectively, so they may be clamped in an electrically contacting manner to the associated first and second connection web 51 or 55, respectively, using the associated first or second clamping spring 41 and 47, respectively.

Each of the first and second pressed screen members 37, 43 is provided with a terminal clamp 65, into which one of two connection wires 67 of a diode 69 may, according to the illustration in Figs. 2 and 3, in each case be clamped.

The four connection lines 25 are guided through one or more connection line through-holes (not shown in the figures) of the connector housing 31, the connection lines 25 being sheathed in the region of this connection line through-hole or these connection line through-holes having a sealing material 71 sealing them from the connector housing 31, to prevent infiltration of moisture through the connection line through-holes into the interior 33 of the connector housing 31.

For the purposes of sheathing with the sealing material 71, once the connection lines 25 have been guided through at least one of the connection line through-holes into the interior of the connector housing 31, the connector housing 31 is, in an embodiment of the invention, introduced into an injection mold, by means of which the connection lines 25 are sheathed with the sealing material 71 in such a way that the sealing material 71 not only surrounds the connection lines 25, but is also provided in securing openings 73 in a side wall 75, adjacent to the connection lines 25, of the connector housing 31 and also on the inside of this side wall 75. The ends, connected to the first and second crimped connections 49 and 53, of the connection lines 25 are thus secured to the connector housing 31 in a particularly reliable manner.

In solar battery cell-related applications, outer casings of the connection lines 25 are made from a crosslinked plastic material that is particularly resistant to the effects of light and weather and conventionally has a relatively smooth outer surface. In order to reduce the risk of the connection lines 25 sliding within the sealing material 71, an agent reducing the smoothness of the outer surface is applied, in an embodiment of the invention, to each of the four connection lines 25 or else around each pair of inner and outer connection lines 39, 45. In a practical embodiment, conventional commercial cable ties are wound for this purpose around each of the connection lines 25 or each pair of inner and outer connection lines 39, 45, where they are secured; the cable ties then have a securing effect in the sealing material 71.

A base 63 of the connector housing 31 is provided with locking devices (not shown in the drawings), by means of which the first and second pressed screen members 37 and 43 may be locked to the connector housing 31, to be fixed therein.

Fig. 4 shows the embodiment, illustrated in Figs. 2 and 3, of the connecting device 13 in a photograph-like illustration, in which the individual components of the connecting device 13 may be distinguished from one another more easily. The first and second pressed screen members 37 and 43, with the first and second crimped connections 49, 53, the first and second connection webs 51, 55 and the first and second clamping springs 41 and 47 arranged thereon, may be seen particularly clearly.

Figs. 2 to 4 show the connecting device 13 while it is still open, once all of the connections between the connection lines 25 and the foil conductors 29 have been produced and once the sealing material 71 has been applied. Before the connecting device 13 in the state according to Fig. 4 is closed, with a lid 77 according to the illustration in Fig. 5, by locking tabs 79 provided on the lid 77 in locking openings 81 provided on the connector housing 31, the interior 33 of the connector housing 31 is filled with a filler (not shown in the drawings). The filler used is an embedding compound comprising, for example, TPE (thermoplastic elastomer) or EPDM (ethylene propylene diene monomer).

The lid 77 is provided with a centrally arranged ventilation grate 83 allowing pressure compensation if the internal pressure within the connector housing 31 differs from the atmospheric pressure, such as may occur in the event of temperature variation. In order to prevent liquid, for example rainwater, from infiltrating the interior of the connector housing 31, a microporous, water-tight, air-permeable membrane (not shown in the drawings) is arranged on the inside of the ventilation grate 83. The membrane prevents liquid that has passed through the ventilation grate 83 from penetrating further into the interior 33 of the connector housing 31. Excess pressure that builds up in the interior 33 of the connector housing 31 may be reduced by allowing air to escape outwardly from the interior 33 of the connector housing 31 through the membrane. A suitable membrane material is, for example, ePTFE (expanded polytetrafluoroethylene), available under the name GORE-TEX® from W.L. Gore and Associates GmbH (Putzbrunn, Germany).

The connecting device 13 according to Figs. 2 to 5 allows the connection lines 25 and the foil conductors 29 to be connected in the following manner.

Firstly, the ends of the connection lines 25 (the ends of which are, for example, already stripped) are guided through the at least one connection line through-hole in the connector housing 31. The connection lines 25 are, for example, drawn through the at least one connection line through-hole sufficiently far that their free ends protrude beyond the side wall of the connector housing 31 that opposes the side wall 75. The pressed screen 35 is then crimped, prior to the isolation thereof, into the first and second pressed screen members 37 and 43, its first and second crimped connections 49 and 53 being crimped to the stripped ends of the connection lines 25. The connection lines 25 are then withdrawn sufficiently far that the pressed screen 35 enters the interior of the connector housing 31, where it is fixed as a result of being locked to the locking elements located in the connector housing 31. The pressed screen 35 is then broken down into its first and second pressed screen members 37 and 43, if this has not already taken place. The connector housing 31 is then inserted, together with the first and second pressed screen members 37, 43 and the connection lines 25 connected thereto, into an injection mold, by means of which the sealing material 71 is placed around the connection lines 25 and onto the side walls 75 of the connector housing 31. The foil conductors 29, which are to be connected to the connection lines 25, are threaded through the foil conductor through-hole 61 in the base 63 of the connector housing 31 into the interior 33 of the connector housing 31, their free ends being wound around each of the first and second connection webs 51 and 55, respectively, in the manner shown in Fig. 3, and are then clamped by attachment of the first and second clamping spring 41 or 47 to each of the first and second connection webs 51 and 55, respectively, thus producing an electrical connection between the foil conductors 29 and the associated line of the connection lines 25.

Filler (not shown in the drawings) is then introduced into the interior 33 of the connector housing 31, and the connector housing 31 is closed using the lid 77. In order to improve the seal between the connector housing 31 and the lid 77, a seal is formed beforehand in a peripheral recess at the upper end, opposing the housing base 63, of the connector housing 31.

A connecting device 13 according to Figs. 2 to 5 may be used for producing a connection for connection in parallel of a plurality of solar cells, should addition of the output currents of a plurality of solar cells be desired. The first and second pressed screen members 37 and 43 are each configured in such a way that they connect each associated first and second connection webs 51 and 55, respectively, to the two inner connection lines 39 or to the two outer connection lines 45.

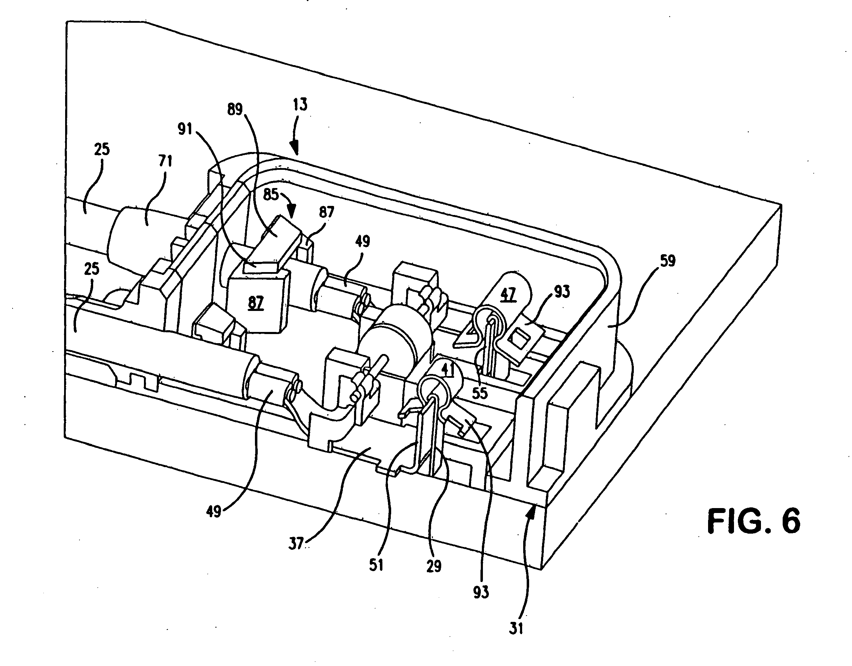

An embodiment of a connecting device 13 according to the invention suitable for connecting in series a plurality of solar cells, should an addition of the individual voltages of the solar cells connected in series be desired, will be described with reference to Fig. 6. In this embodiment, the first and second pressed screen members 37 and 43 are configured in such a way that they connect each of the first and second connection webs 51 and 55 to only one connection line 25. In all other respects, identical reference numerals denote identical elements to those indicated in the embodiment shown in Figs. 2 to 5.

Both embodiments according to Figs. 4 and 6 comprise pressed screens 35 allowing the diode 69 to be connected. The diodes 69 are provided to prevent compensatory currents between solar cells located in sunlight and solar cells located in shade, which supply different solar currents and solar voltages.

In the embodiment shown in Fig. 6, the connection lines 25 are each strain-relieved, at their end regions protruding into the connector housing 31, using a strain relief member 85, by means of which each end of the connection line 25 is clamped. For this purpose, each of the two strain relief members 85 comprises two lateral posts 87, raising up from the base 63 of the connector housing 31 on both sides of each of the connection line 25, and a bridge 89 bridging the lateral posts 87. Both insides of the lateral posts 87 and outsides of outer arms 91 of the bridge 89 are provided with complementary locking teeth, which are configured in such a way that the bridge 89 may be lowered toward the base 63 of the connector housing 31 until each connection line 25 is clamped, but is prevented from moving in the opposite direction thereto.

In the embodiment illustrated in Figs. 2 to 5 of a connecting device 13 according to the invention, strain relief for the connection lines 25 is prevented, in particular, by the above-mentioned anti-sliding member, which, as mentioned above, is, for example, a cable tie, which is secured around the connection lines 25 prior to sheathing with the sealing material 71.

Both types of strain relief members may be provided in the same connecting device 13.

In an embodiment, the first and second clamping springs 41 and 47 are each tubular with a C-shaped cross-section. In the embodiments illustrated in the figures, the first and second clamping springs 41 and 47 are in the form of a tube with a V-shaped cross-section. In other words, at the free ends of the C-shaped ends of the first and second clamping springs 41, 47, there are provided tabs 93, which protrude therefrom and facilitate handling of the first and second clamping springs 41, 47, both in the case of manual handling and in the case of machine-automated handling.

After each of the first or second clamping spring 41 or 47, either only a single foil conductor 29 is clamped or a plurality of the foil conductors 29 are clamped simultaneously, wherein in the latter case a plurality of the foil conductors 29 may be clamped one above another and/or adjacent to one another. Almost any wiring trees may thus be formed between a large number of solar cells.

The connecting device 13 according to the invention allows connections to be produced between the foil conductors 29 and the connection lines 25 using means that are technically simple, require little time and are therefore cost-effective, especially if the intermediate connecting arrangement is configured as the pressed screen 35. This is particularly the case if the pressed screen 35 is inserted into the connector housing 31 while still in one piece and is only then broken down into the first and second pressed screen members 37, 43. The pressed screen 35 may be produced comparatively simply (especially in comparison to printed circuit boards), allow the integration of crimped connections and may easily be locked in the connector housing 31. As the conductor tracks of the printed screen (unlike the conductor tracks of printed circuit boards) may easily be configured three-dimensionally, they may be integrated in a straightforward manner not only with crimped connections, but also with the first and second connection webs 51, 55 having sufficient inherent strength to allow even the first and second clamping springs 41, 47 having relatively high resilience to be attached, thus allowing particularly effective electrical contact between the foil conductors 29 and the first and second pressed screen members 37, 43. A further component, for example the diode 69, may also be clamped using the pressed screen 35.

Returning to Fig. 1, it should be noted that, following the threading of the foil conductors 29, the production of all of the connections between the foil conductors 29 and the connection lines 25 using the pressed screen 35, the sheathing of the connection lines 25, the filling of the interior of the connector housing 31 with filler, and preferably the closing of the connector housing 31 with the lid 77, the connecting box 13 is fastened to the back of the protective sheet 17, for example using adhesive. As a result of the fact that the connecting box 13 is fastened to the protective sheet 17, the connecting box 13 or a number of connecting boxes 13 may be arranged at almost any locations along the back of the solar module.

## Claims

1. Connecting device for connecting at least two electrical foil conductors (29) to at least two connection lines (25), respectively, comprising
a connector housing (31) having at least four connection line through-holes and at least two foil conductor through-holes (61),
a multipart pressed screen (35), which serves as an intermediate connecting arrangement, wherein
the pressed screen (35) is configured for the clamping connection of two foil conductors (29) and for connecting four connection lines (25) consisting of inner and outer connection lines (39, 45),
the pressed screen (35) is provided with first and second pressed screen members (37, 43), which are isolated from each other in terms of potential,
the first pressed screen member (37) provides the connection between the inner connection lines (39) and a first foil conductor-connection region (51),
the second pressed screen member (43) provides the connection between the two outer connection lines (45) and a second foil conductor-connection region (55),

2. Connecting device according to claim 1, wherein the two pressed screen members (37, 43) are arranged in the connector housing (31) each having at least one intermediate connector, which extends between two of the connection line through-holes and one of the foil conductor through-holes (61) and has at least two connection line connection regions, which are adjacent to the respective connection line through-holes, for connection to the respective connection lines (39, 45), which are guided into an interior (33) of the connector housing (31) through the connection line through-holes, and a current conductor, which extends into the vicinity of the respective foil conductor through-hole (61) and has a foil conductor-connection region (51, 55) for connection to a foil conductor (29), which is guided into the interior (33) of the connector housing (31) through the foil conductor through-hole (61),wherein the current conductor comprises a current conductor region, which is configured for applying a foil conductor-connection region, and clamping spring (41, 47), which is configured for resilient attachment to the current conductor region, and the foil conductor-connection region adjacent thereto, and for clamping, thereby caused, of the foil conductor-connection region to the current conductor region.

3. Connecting device according to claim 1 or claim 2 for use for connecting a solar cell module (11), wherein the at least one of the foil conductors (29) is connected to an electrical contacting region of at least one solar cell (19).

4. Connecting device according to any of claims 1 to 3 , wherein at least one clamping spring (41, 47) has a substantially C-shaped or V-shaped cross-section.

5. Connecting device according to anyone of claims 1 to 4, the current conductor region of which is formed by a dimensionally stable flat conductor configured for applying at least one foil conductor connection region in a flat manner.

6. Connecting device according to anyone of claims 1 to 5, wherein the pressed screen (35) has at least one crimp contact region for crimping to the connection line (25) and a flat contact region for clamping the foil conductor connection region.

7. Connecting device according to claim 6, wherein the pressed screen (35) comprises terminal clamps (65) for electrically connecting an additional component.

8. Connecting device according to anyone of claims 1 to 7, wherein a connection line (25), which is guided through the connection line through-hole, is sheathed in the region of the connection line through-hole with a sealing material (71) producing a seal from the connector housing (31).

9. Connecting device according to claim 8, wherein prior to sheathing with the sealing material (71), an agent improving the adhesion of the sealing material is applied to the outer perimeter of the connection line (25).

10. Connecting device according to anyone of claims 6 to 9, wherein the connector housing (31) is provided with a locking device for locking the pressed screen (35) in the connector housing (31).

11. Method for producing a connection between a foil conductor (29) and a connection line (25) using a connecting device (13) according to anyone of claims 1 to 10, wherein the at least one connection line (25) is guided through the connection line through-hole into the interior (33) of the connector housing (31) and connected to the connection line-connection region of the intermediate connecting arrangement, and the at least one foil connection region is guided through the foil conductor through-hole (61) into the interior (33) of the connector housing (31) to the foil conductor connection region of the intermediate connecting arrangement, where it is clamped using the clamping spring (41, 47).

12. Method according to claim 11, using a pressed screen (35) according to either claim 5 or claim 6 as the intermediate connecting arrangement, wherein the at least one connection line (25) is crimped to the crimp contact region of the pressed screen (35), the pressed screen (35) is then inserted into the connector housing (31) and the foil connection region is subsequently clamped to the foil conductor-connection region of the pressed screen (35).

13. Method according to claim 12, using a pressed screen (35) having a plurality of separate pressed screen members (37, 43), wherein the pressed screen (35) is inserted into the connector housing (31) while still in one piece and is only then broken down into the various pressed screen members (37, 43).

14. Method according to anyone of claims 11 to 13, wherein following the connection of the at least one connection line (25) to the pressed screen (35) and the insertion of the pressed screen (35) into the connector housing (31), the connection line (25) is sheathed with the sealing material (71) in the region of the connection line through-hole.

15. Method according to anyone of claims 11 to 14, wherein following the connection of the at least one connection line (25) to the pressed screen {35), the clamping of the foil connection region to the flat contact region of the pressed screen (35) and the insertion of the pressed screen (35) into the connector housing (31), the module thus formed is inserted into an injection mold, by means of which the interior of the connector housing is filled with a filler.

16. Solar battery module comprising a number of solar cells (19),
at least one selectively patterned conductor foil (23), which electrically contacts the solar cells (19), on the irradiation-shadow back thereof, and has at least two foil conductor connection regions, which protrude from the solar cells (19),
and at least one connecting device (13) according to anyone of claims 1 to 10 fastened to the back of the solar module (11),
the foil conductor-connection regions being guided through the foil conductor through-hole (61) of the connector housing (31) of the connecting device (13) to the flat conductor regions of the intermediate connecting device and being connected to said regions by means of the clamping springs (41, 47).

17. Solar module according to claim 16, wherein the solar cells (19) and the at least one conductor foil (23) are arranged between a transparent solar irradiation-side cover sheet (15) and an irradiation shadow-side protective sheet (17), the protective sheet (17) is provided with at least one through-hole (27) for conductor foil connection regions, and at least one connecting device (13) is fastened to the back of the protective sheet (17).

18. Solar module according to claim 17, wherein the connecting device (13) is fastened to the protective sheet (17) by adhesion.

## Patentansprüche

1. Verbindungseinrichtung zum jeweiligen Verbinden von wenigstens zwei elektrischen Folienleitern (29) mit wenigstens zwei Verbindungsleitungen (25), wobei die Einrichtung Folgendes umfasst:
ein Verbindergehäuse (31), das wenigstens vier Verbindungsleitung-Durchgangslöcher und wenigstens zwei Folienleiter-Durchgangslöcher (61) hat,
eine mehrteilige gepresste Abschirmung (35), die als eine dazwischenliegende Verbindungsanordnung dient, wobei
die gepresste Abschirmung (35) für die Klemmverbindung von zwei Folienleitern (29) und zum Verbinden von vier Verbindungsleitungen (25), die aus inneren und äußeren Verbindungsleitungen (39, 45) bestehen, konfiguriert ist,
die gepresste Abschirmung (35) mit einem ersten und einem zweiten gepressten Abschirmungselement (37, 43) versehen ist, die in Bezug auf das Potential voneinander isoliert sind,
das erste gepresste Abschirmungselement (37) die Verbindung zwischen den zwei inneren Verbindungsleitungen (39) und einem ersten Folienleiter-Verbindungsbereich (51) bereitstellt,
das zweite gepresste Abschirmungselement (43) die Verbindung zwischen den zwei äußeren Verbindungsleitungen (45) und einem zweiten Folienleiter-Verbindungsbereich (55) herstellt.

2. Verbindungseinrichtung nach Anspruch 1, wobei die zwei gepressten Abschirmungselemente (37, 43) in dem Verbindergehäuse (31) angeordnet sind, wobei jedes wenigstens einen Zwischenverbinder, der sich zwischen zweien der Verbindungsleitung-Durchgangslöcher und einem der Folienleiter-Durchgangslöcher (61) erstreckt und der wenigstens zwei Verbindungsleitung-Verbindungsbereiche hat, die an die jeweiligen Verbindungsleitung-Durchgangslöcher angrenzen, für eine Verbindung mit den jeweiligen Verbindungsleitungen (39, 45), die durch die Verbindungsleitung-Durchgangslöcher in ein Inneres (33) des Verbindergehäuses (31) geführt werden, und einen Stromleiter, der sich in die Nachbarschaft des jeweiligen Folienleiter-Durchgangslochs (61) erstreckt und einen Folienleiter-Verbindungsbereich (51, 55) hat, für eine Verbindung mit einem Folienleiter (29), der durch das Folienleiter-Durchgangsloch (61) in das Innere (33) des Verbindergehäuses (31) geführt wird, hat, wobei der Stromleiter einen Stromleiterbereich, der dafür konfiguriert ist, einen Folienleiter-Verbindungsbereich anzubringen, und eine Klemmfeder (41, 47), die für eine elastische Befestigung an dem Stromleiterbereich und dem daran angrenzenden Folienleiter-Verbindungsbereich und für das **dadurch** veranlasste Festklemmen des Folienleiter-Verbindungsbereichs an dem Stromleiterbereich konfiguriert ist, umfasst.

3. Verbindungseinrichtung nach Anspruch 1 oder Anspruch 2 für eine Verwendung zum Verbinden eines Solarzellenmoduls (11), wobei der wenigstens eine der Folienleiter (29) mit einem elektrischen Kontaktbereich wenigstens einer Solarzelle (19) verbunden ist.

4. Verbindungseinrichtung nach einem der Ansprüche 1 bis 3, wobei wenigstens eine Klemmfeder (41, 47) einen im Wesentlichen C-förmigen oder V-förmigen Querschnitt hat.

5. Verbindungseinrichtung nach einem der Ansprüche 1 bis 4, deren Stromleiterbereich durch einen abmessungsstabilen flachen Leiter gebildet ist, der dafür konfiguriert ist, auf eine flache Weise wenigstens einen Folienleiter-Verbindungsbereich anzubringen.

6. Verbindungseinrichtung nach einem der Ansprüche 1 bis 5, wobei die gepresste Abschirmung (35) wenigstens einen Crimpkontaktbereich zum Crimpen an die Verbindungsleitung (25) und einen flachen Kontaktbereich zum Festklemmen des Folienleiter-Verbindungsbereichs hat.

7. Verbindungseinrichtung nach Anspruch 6, wobei die gepresste Abschirmung (35) Anschlussklemmen (65) zum elektrischen Verbinden eines zusätzlichen Bauteils umfasst.

8. Verbindungseinrichtung nach einem der Ansprüche 1 bis 7, wobei eine Verbindungsleitung (25), die durch das Verbindungsleitung-Durchgangsloch geführt wird, in dem Bereich des Verbindungsleitung-Durchgangslochs mit einem Dichtungsmaterial (71) ummantelt ist, das eine Dichtung gegenüber dem Verbindergehäuse (31) erzeugt.

9. Verbindungseinrichtung nach Anspruch 8, wobei vor dem Ummanteln mit dem Dichtungsmaterial (71) ein Mittel, das die Haftung des Dichtungsmaterials verbessert, auf den Außenumfang der Verbindungsleitung (25) aufgebracht ist.

10. Verbindungseinrichtung nach einem der Ansprüche 6 bis 9, wobei das Verbindergehäuse (31) mit einer Arretierungseinrichtung zum Arretieren der gepressten Abschirmung (35) in dem Verbindergehäuse (31) versehen ist.

11. Verfahren zum Herstellen einer Verbindung zwischen einem Folienleiter (29) und einer Verbindungsleitung (25) unter Verwendung einer Verbindungseinrichtung (13) nach einem der Ansprüche 1 bis 10, wobei die wenigstens eine Verbindungsleitung (25) durch das Verbindungsleitung-Durchgangsloch in das Innere (33) des Verbindergehäuses (31) geführt und mit dem Verbindungsleitung-Verbindungsbereich der dazwischenliegenden Verbindungsanordnung verbunden wird und der wenigstens eine Folienleiter-Verbindungsbereich durch das Folienleiter-Durchgangsloch (61) in das Innere (33) des Verbindergehäuses (31) zu dem Folienleiter-Verbindungsbereich der dazwischenliegenden Verbindungsanordnung geführt wird, wo er unter Verwendung der Klemmfeder (41, 47) festgeklemmt wird.

12. Verfahren nach Anspruch 11, unter Verwendung einer gepressten Abschirmung (35) nach Anspruch 5 oder Anspruch 6 als die dazwischenliegende Verbindungsanordnung, wobei die wenigstens eine Verbindungsleitung (25) an den Crimpkontaktbereich der gepressten Abschirmung (35) gecrimpt wird, die gepresste Abschirmung (35) danach in das Verbindergehäuse (31) eingesetzt wird und der Folienverbindungsbereich anschließend an den Folienleiter-Verbindungsbereich der gepressten Abschirmung (35) geklemmt wird.

13. Verfahren nach Anspruch 12, unter Verwendung einer gepressten Abschirmung (35), die mehrere gesonderte gepresste Abschirmungselemente (37, 43) hat, wobei die gepresste Abschirmung (35) in das Verbindergehäuse (31) eingesetzt wird, während sie noch in einem Stück vorliegt, und erst danach in die mehreren gepressten Abschirmungselemente (37, 43) zerbrochen wird.

14. Verfahren nach einem der Ansprüche 11 bis 13, wobei anschließend an das Verbinden der wenigstens einen Verbindungsleitung (25) mit der gepressten Abschirmung (35) und das Einsetzen der gepressten Abschirmung (35) in das Verbindergehäuse (31) die Verbindungsleitung (25) in dem Bereich des Verbindungsleitung-Durchgangslochs mit dem Abdichtungsmaterial (71) ummantelt wird.

15. Verfahren nach einem der Ansprüche 11 bis 14, wobei anschließend an das Verbinden der wenigstens einen Verbindungsleitung (25) mit der gepressten Abschirmung (35), das Festklemmen des Folienverbindungsbereich an den flachen Kontaktbereich der gepressten Abschirmung (35) und das Einsetzen der gepressten Abschirmung (35) in das Verbindergehäuse (31) das so geformte Modul in eine Spritzgussform eingesetzt wird, mit deren Hilfe das Innere des Verbindergehäuses mit einem Füllstoff gefüllt wird.

16. Solarbatteriemodul, umfassend eine Zahl von Solarzellen (19),
wenigstens eine selektiv gemusterte Leiterfolie (23), welche die Solarzellen (19), auf der Bestrahlungsschatten-Rückseite derselben, elektrisch verbindet und wenigstens zwei Folienleiter-Verbindungsbereiche hat, die von den Solarzellen (19) aus vorspringen,
und wenigstens eine Verbindungseinrichtung (13) nach einem der Ansprüche 1 bis 10, die an der Rückseite des Solarmoduls (11) befestigt ist,
wobei die Folienleiter-Verbindungsbereiche durch das Folienleiter-Durchgangsloch (61) des Verbindergehäuses (31) der Verbindungseinrichtung (13) zu den flachen Leiterbereichen der dazwischenliegenden Verbindungseinrichtung geführt werden und mit Hilfe der Klemmfedern (41, 47) mit den Bereichen verbunden sind.

17. Solarmodul nach Anspruch 16, wobei die Solarzellen (19) und die wenigstens eine Leiterfolie (23) zwischen einer transparenten Abdeckungsbahn (15) auf der Sonnenbestrahlungsseite und einer Schutzbahn (17) auf der Bestrahlungsschattenseite angeordnet sind, die Schutzbahn (17) mit wenigstens einem Durchgangsloch (27) für Leiterfolien-Verbindungsbereiche versehen ist und die wenigstens eine Verbindungseinrichtung (13) an der Rückseite der Schutzbahn (17) befestigt ist.

18. Solarmodul nach Anspruch 17, wobei die Verbindungseinrichtung (13) durch Kleben an der Schutzbahn (17) befestigt ist.

## Revendications

1. Dispositif de connexion pour connecter respectivement au moins deux conducteurs à feuille électriques (29) à au moins deux lignes de connexion (25), comprenant :
un boîtier de connecteur (31), comportant au moins quatre trous de passage des lignes de connexion et au moins deux trous de passage des conducteurs à feuille (61) ;
une grille estampée à plusieurs parties (35), servant de dispositif de connexion intermédiaire ; dans lequel
la grille estampée (35) est configurée en vue de la connexion par serrage de deux conducteurs à feuille (29) et pour la connexion de quatre lignes de connexion (25), comprenant des lignes de connexion internes et externes (39, 45) ;
la grille estampée (35) comporte des premier et deuxième éléments de grille estampée (37, 43), isolés l'un de l'autre en termes de potentiel ;
le premier élément de la grille estampée (37) établissant la connexion entre les lignes de connexion internes (39) et une première région de connexion des conducteurs à feuille (51) ;
le deuxième élément de la grille estampée (43) établissant la connexion entre les deux lignes de connexion externes (45) et une deuxième région de connexion des conducteurs à feuille (55).

2. Dispositif de connexion selon la revendication 1, dans lequel les deux éléments de la grille estampée (37, 43) sont agencés dans le boîtier du connecteur (31), chacun comportant au moins un connecteur intermédiaire s'étendant entre deux des trous de passage de la ligne et connexion et l'un des trous de passage du conducteur à feuille (61), et comportant au moins deux régions de connexion de la ligne de connexion, adjacentes aux trous de passage respectifs de la ligne de connexion, en vue de la connexion aux lignes de connexion respectives (39, 45), qui son guidées vers un intérieur (33) du boîtier du connecteur (31) à travers les trous de passage des lignes de connexion, et un conducteur de courant, s'étendant dans la voisinage du trou de passage respectif du conducteur à feuille (61) et comportant une région de connexion du conducteur à feuille (51, 55), en vue de la connexion à un conducteur à feuille (29), qui est guidé vers l'intérieur (33) du boîtier du connecteur (31) à travers le trou de passage du conducteur à feuille (61), le conducteur de courant comprenant une région du conducteur de courant, configurée de sorte à établir une région de connexion du conducteur à feuille, et un ressort de serrage (41, 47), configuré en vue d'une fixation élastique à la région du conducteur de courant, et à la région de connexion du conducteur à feuille qui y est adjacente, pour serrer ainsi la région de connexion du conducteur à feuille à la région du conducteur de courant.

3. Dispositif de connexion selon les revendications 1 ou 2, destiné à être utilisé pour connecter un module de cellule solaire (11), dans lequel au moins un des conducteurs à feuille (29) est connecté à une région de contact électrique d'au moins une cellule solaire (19).

4. Dispositif de connexion selon l'une quelconque des revendications 1 à 3, dans lequel au moins un ressort de serrage (41, 47) a une section transversale pratiquement en forme de C ou en forme de V.

5. Dispositif de connexion selon l'une quelconque des revendications 1 à 4, dont la région du conducteur de courant est formée par un conducteur plat à stabilité dimensionnelle, destiné à établir au moins une région de connexion du conducteur à feuille, d'une manière plate.

6. Dispositif de connexion selon l'une quelconque des revendications 1 à 5, dans lequel la grille estampée (35) comporte au moins une région de contact à sertir, en vue d'un sertissage à la ligne de connexion (25), et une région de contact plat, en vue du sertissage à la région de connexion du conducteur à feuille.

7. Dispositif de connexion selon la revendication 6, dans lequel la grille estampée (35) comprend des bornes de raccordement (65) pour assurer la connexion électrique d'un composant additionnel.

8. Dispositif de connexion selon l'une quelconque des revendications 1 à 7, dans lequel une ligne de connexion (25), guidée à travers le trou de passage de la ligne de connexion, est gainée dans la région du trou de passage de la ligne de connexion par un matériau d'étanchéité (71), établissant un joint d'étanchéité par rapport au boîtier du connecteur (31).

9. Dispositif de connexion selon la revendication 8, dans lequel, avant le gainage avec le matériau d'étanchéité (71), un agent améliorant l'adhésion du matériau d'étanchéité est appliqué sur le périmètre extérieur de la ligne de connexion (25).

10. Dispositif de connexion selon l'une quelconque des revendications 6 à 9, dans lequel le boîtier du connecteur (31) comporte un dispositif de verrouillage pour verrouiller la grille estampée (35) dans le boîtier du connecteur (31).

11. Procédé d'établissement d'une connexion entre un conducteur à feuille (29) et une ligne de connexion (25) par l'intermédiaire d'un dispositif de connexion (13) selon l'une quelconque des revendications 1 à 10, dans lequel la au moins une ligne de connexion (25) est guidée à travers le trou de passage de la ligne de connexion dans l'intérieur (33) du boîtier du connecteur (31) et connectée à la région de connexion de la ligne de connexion du dispositif de connexion intermédiaire, la au moins une région de connexion du conducteur à feuille étant guidée à travers le trou de passage du conducteur à feuille (61) dans l'intérieur (33) du boîtier du connecteur (31), vers la région de connexion du conducteur à feuille du dispositif de connexion intermédiaire, où elle est serrée par l'intermédiaire du ressort de serrage (41, 47).

12. Procédé selon la revendication 11, utilisant une grille estampée (35) selon l'une des revendications 5 ou 6 comme dispositif de connexion intermédiaire, la au moins une ligne de connexion (25) étant sertie à la région du contact à sertir de la grille estampée (35), la grille estampée (35) étant ensuite insérée dans le boîtier du connecteur (31), et la région de connexion du conducteur à feuille étant alors serrée sur la région de connexion du conducteur à feuille de la grille estampée (35).

13. Procédé selon la revendication 12, utilisant une grille estampée (35) comportant plusieurs éléments de grille estampée séparés (37, 43), la grille estampée (35) étant insérée dans le boîtier du connecteur (31) dans l'état constitué d'une seule pièce et n'étant qu'ensuite séparée dans les différents éléments de la grille estampée (37, 43).

14. Procédé selon l'une quelconque des revendications 11 à 13, dans lequel, après la connexion de la au moins une ligne de connexion (25) à la grille estampée (35) et l'insertion de la grille estampée (35) dans le boîtier du connecteur (31), la ligne de connexion (25) est gainée par un matériau d'étanchéité (71) dans la région du trou de passage de la ligne de connexion.

15. Procédé selon l'une quelconque des revendications 11 à 14, dans lequel, après la connexion de la au moins une ligne de connexion (25) à la grille estampée (35), le serrage de la région de connexion du conducteur à feuille sur la région du contact plat de la grille estampée (35) et l'insertion de la grille estampée (35) dans le boîtier du connecteur (31), le module ainsi formé est inséré dans un moule par injection, par l'intermédiaire duquel l'intérieur du boîtier du connecteur est rempli d'une charge.

16. Module de batterie solaire comprenant plusieurs cellules solaires (19),
au moins une feuille conductrice à motif sélectif (23), en contact électrique avec les cellules solaires (19), sur la partie arrière opaque à l'irradiation de celles-ci, et comportant au moins deux régions de connexion du conducteur à feuille, débordant des cellules solaires (19) ;
et au moins un dispositif de connexion (13) selon l'une quelconque des revendications 1 à 10, fixé sur la partie arrière du module solaire (11) ;
les régions de connexion du conducteur à feuille étant guidées à travers le trou de passage du conducteur à feuille (61) du boîtier du connecteur (31) du dispositif de connexion (13), vers les régions de conducteur plat du dispositif de connexion intermédiaire et étant connectées aux dites régions par l'intermédiaire des ressorts de serrage (41, 47).

17. Module solaire selon la revendication 16, dans lequel les cellules solaires (19) et le au moins un conducteur (23) sont agencés entre une feuille de couverture transparente du côté de l'irradiation solaire (15) et une feuille de protection du côté opaque à l'irradiation (17), la feuille de protection (17) comportant au moins un trou de passage (27) pour des régions de connexion du conducteur à feuille, et le au moins un dispositif de connexion (13) étant fixé sur le côté arrière de la feuille de protection (17).

18. Module solaire selon la revendication 17, dans lequel le dispositif de connexion (13) est fixé sur la feuille de protection (17) par adhésion.
